# EUROPEAN PATENT APPLICATION

(11) **EP 4 653 853 A1**
(43) Date of publication of application: **26.11.2025**
(21) Application number: 25175123.6
(22) Date of filing: 08.05.2025
(51) Int. Cl.: G01N 21/88, G01N 21/95, G01N 21/952

(54) **APPARATUS FOR SEPARATION ROTATING IMAGING**

(30) Priority: 20.05.2024 KR 20240064995
(71) Applicant: AiV Co., Ltd., Yongin-si, Gyeonggi-do 16942 (KR)
(72) Inventor: LEE, Sang Hyun, 18452 Hwaseong-si (KR); LEE, IL KU, 18430 Hwaseong-si (KR)
(74) Representative: Patentwerk B.V.

(57) **Abstract**

According to an embodiment of the present disclosure, disclosed is an apparatus for imaging an object. The apparatus may include: a first circular plate configured to perform a first rotational motion; a second circular plate installed on the first circular plate and configured to perform a second rotational motion of a different type from the first rotational motion in a second rotation zone on a same plane as the first circular plate; and an imaging device configured to image an object supported on the second circular plate while the second circular plate performs the second rotational motion in the second rotation zone.

## Description

### CROSS-REFERENCE TO RELATED APPLICATIONS

This application claims priority to and the benefit of Korean Patent Application No. 10-2024-0064995 filed in the Korean Intellectual Property Office on May 20, 2024, the entire contents of which are incorporated herein by reference.

### TECHNICAL FIELD

The present disclosure relates to a method for separation rotating imaging, and particularly, to a method for imaging an object by utilizing a plurality of separated rotation drives.

### BACKGROUND ART

In general, when an object to be imaged has a three-dimensional structure, imaging at multiple angles utilizing a method of changing a position of an imaging apparatus, rotating the object, or the like is required for imaging an entire object. At this time, there is a demand to develop the imaging apparatus for improving imaging efficiency and preventing electronic errors and mechanical defects. In particular, when the imaging apparatus is used for defect inspection of a manufactured product, a need for an imaging apparatus capable of increasing the efficiency of a process is emphasized.

Korean Patent No. 1701370 (January 24, 2017) discloses an apparatus for inspecting solution in bottle.

### SUMMARY OF THE INVENTION

The present disclosure has been made in an effort to provide a method for separation rotating imaging, and particularly, to imaging an object by utilizing a plurality of separated rotation drives. For example, the present disclosure may have been made in an effort to utilize a first rotation that causes an object to revolve and a second rotation that causes the object to rotate by a separately equipped device in a specific area, thereby imaging the object at high speed at multiple angles.

On the other hand, the technical problem to be achieved by the present disclosure is not limited to the technical problem mentioned above, and various technical problems may be included within the range obvious to those skilled in the art from the content to be described below.

In order to implement the above-described object, an embodiment of the present disclosure provides an apparatus for separation rotating imaging. The apparatus may include: a first circular plate performing a first rotational motion; a second circular plate installed on the first circular plate and configured to perform a second rotational motion of a different type from the first rotational motion in a second rotation zone on the same plane as the first circular plate; and an imaging unit configured to image an object supported on the second circular plate while the second circular plate performs the second rotational motion in the second rotation zone.

In an embodiment, the second circular plate may revolve on the first circular plate by the first rotational motion, and the second circular plate may rotate by the second rotational motion.

In an embodiment, while the second circular plate performs the second rotational motion in the second rotation zone, the imaging unit that images the object supported on the second circular plate may image a side surface of the object.

In an embodiment, the first rotational motion may be implemented through a guide rail installed at an upper end or a lower end of the first circular plate, and the second rotation zone may correspond to a zone where the guide rail is not installed in a region where the second circular plate revolves.

In an embodiment, the apparatus may further include a guide rail matching unit configured to link the guide rail and the second circular plate.

In an embodiment, the apparatus may further include a fixation unit configured to fix the object to the second circular plate, and the fixation unit may fix the object by magnetism.

In an embodiment, the apparatus may further include: an input unit configured to locate the object on the second circular plate on either side of the first circular plate; a recovery unit configured to recover the object located on the second circular plate; and a transfer unit configured to transfer the recovered object.

In an embodiment, the apparatus may further include a top surface imaging unit configured to image a top surface of the object; and a bottom surface imaging unit configured to image a bottom surface of the object.

In an embodiment, the apparatus may further include a classification unit configured to classify a good product based on an object imaging result of at least one of the imaging unit, the top surface imaging unit, or the bottom surface imaging unit.

In an embodiment, the classification unit that classifies the good product based on the object imaging result of at least one of the imaging unit, the top surface imaging unit, or the bottom surface imaging unit may make a first classification for the object when the object does not reach a set criterion, and make a second classification for the object subjected to the first classification according to an unreached element of the set criterion.

In order to implement the above-described object, another embodiment of the present disclosure provides a method for imaging an object performed by a computing device. The method may include: controlling a first circular plate to perform a first rotational motion; controlling a second circular plate installed on the first circular plate to perform a second rotational motion of a different type from the first rotational motion in a second rotation zone on the same plane as the first circular plate; and controlling to image an object ,mounted on the second circular plate while the second circular plate performs the second rotational motion in the second rotation zone.

In order to implement the above-described object, yet another embodiment of the present disclosure provides a computer program stored in a computer readable medium. When the computer program is executed by one or more processors, the computer program may allow the one or more processors to perform the following operations for imaging an object, and the operations may include: a first rotational motion in which a first circular plate rotates; a second rotational motion in which a second circular plate installed on the first circular plate rotates in a different type from the first rotational motion in a second rotation zone on the same plane as the first circular plate; and an operation of imaging an object supported on the second circular plate while the second circular plate performs the second rotational motion in the second rotation zone.

According to an embodiment of the present disclosure, provided is an apparatus for separation rotating imaging, and particularly, an object can be imaged by utilizing a plurality of separated rotation drives. For example, according to an embodiment of the present disclosure, a first rotation that causes an object to revolve and a second rotation that causes the object to rotate by a separately equipped device in a specific area are utilized, thereby imaging the object at high speed from multiple angles. Further, as an example, by receiving rotational power required for imaging and utilizing a mechanical method in a process of inputting or retracting an object, it is possible to prevent an electronic error in a high-speed imaging environment and prolong a device life.

On the other hand, the effect of the present disclosure is not limited to the above-mentioned effects, and various effects may be included within the range apparent to those skilled in the art from the content to be described below.

### BRIEF DESCRIPTION OF THE DRAWINGS

FIG. 1 is a block configuration diagram of a computing device for separation rotating imaging according to an embodiment of the present disclosure.
FIG. 2 is a schematic diagram illustrating a network function according to an exemplary embodiment of the present disclosure.
FIG. 3 is a flowchart showing a method for separation rotating imaging performed by the computing device according to an embodiment of the present disclosure.
FIG. 4 is an overall configuration diagram of a separation rotating imaging apparatus according to an embodiment of the present disclosure.
FIG. 5 is a configuration diagram of a part of a main configuration of the separation rotating imaging apparatus according to an embodiment of the present disclosure.
FIG. 6 is a schematic configuration diagram of an imaging unit of the separation rotating imaging apparatus according to an embodiment of the present disclosure.
FIG. 7 is a schematic configuration diagram of a guide rail portion of the separation rotating imaging apparatus according to an embodiment of the present disclosure.
FIG. 8 is a schematic configuration diagram of an input unit, a recovery unit, a first circular plate, and a second circular plate of the separation rotating imaging apparatus according to an embodiment of the present disclosure.
FIG. 9 is a schematic configuration diagram of a fixation unit of the separation rotating imaging apparatus according to an embodiment of the present disclosure.
FIG. 10 is a detailed configuration diagram of the fixation unit near the input unit and the recovery unit according to an embodiment of the present disclosure.
FIG. 11 is a schematic configuration diagram of a first rotating plate, a second rotating plate, an input unit, and a recovery unit according to an embodiment of the present disclosure.
FIG. 12 is a schematic configuration diagram of an upper surface imaging unit of the separation rotating imaging apparatus according to an embodiment of the present disclosure.
FIG. 13 is a schematic configuration diagram of a lower surface imaging unit of the separation rotating imaging apparatus according to an embodiment of the present disclosure.
FIG. 14 is a schematic detailed configuration diagram of a classification unit of the separation rotating imaging apparatus according to an embodiment of the present disclosure.
FIG. 15 is a schematic overall configuration diagram of the classification unit of the separation rotating imaging apparatus according to an embodiment of the present disclosure.
FIG. 16 is a simplified general schematic diagram of an exemplary computing environment in which the embodiments of the present disclosure may be implemented.

### DETAILED DESCRIPTION

Various exemplary embodiments are described with reference to the drawings. In the present specification, various descriptions are presented for understanding the present disclosure. However, it is obvious that the exemplary embodiments may be carried out even without a particular description.

Terms, "component", "module", "system", and the like used in the present specification indicate a computer-related entity, hardware, firmware, software, a combination of software and hardware, or execution of software. For example, a component may be a procedure executed in a processor, a processor, an object, an execution thread, a program, and/or a computer, but is not limited thereto. For example, both an application executed in a computing device and a computing device may be components. One or more components may reside within a processor and/or an execution thread. One component may be localized within one computer. One component may be distributed between two or more computers. Further, the components may be executed by various computer readable media having various data structures stored therein. For example, components may communicate through local and/or remote processing according to a signal (for example, data transmitted to another system through a network, such as the Internet, through data and/or a signal from one component interacting with another component in a local system and a distributed system) having one or more data packets.

Further, a term "or" intends to mean comprehensive "or" not exclusive "or". That is, unless otherwise specified or when it is unclear in context, "X uses A or B" intends to mean one of the natural comprehensive substitutions. That is, in the case where X uses A; X uses B; or, X uses both A and B, "X uses A or B" may apply to either of these cases. Further, a term "and/or" used in the present specification shall be understood to designate and include all of the possible combinations of one or more items among the listed relevant items.

Further, a term "include" and/or "including" shall be understood as meaning that a corresponding characteristic and/or a constituent element exists. Further, it shall be understood that a term "include" and/or "including" means that the existence or an addition of one or more other characteristics, constituent elements, and/or a group thereof is not excluded. Further, unless otherwise specified or when it is unclear that a single form is indicated in context, the singular shall be construed to generally mean "one or more" in the present specification and the claims.

Further, the term "at least one of A and B" should be interpreted to mean "the case including only A", "the case including only B", and "the case where A and B are combined".

Those skilled in the art shall recognize that the various illustrative logical blocks, configurations, modules, circuits, means, logic, and algorithm operations described in relation to the exemplary embodiments additionally disclosed herein may be implemented by electronic hardware, computer software, or in a combination of electronic hardware and computer software. In order to clearly exemplify interchangeability of hardware and software, the various illustrative components, blocks, configurations, means, logic, modules, circuits, and operations have been generally described above in the functional aspects thereof. Whether the functionality is implemented as hardware or software depends on a specific application or design restraints given to the general system. Those skilled in the art may implement the functionality described by various methods for each of the specific applications. However, it shall not be construed that the determinations of the implementation deviate from the range of the contents of the present disclosure.

The description about the presented exemplary embodiments is provided so as for those skilled in the art to use or carry out the present disclosure. Various modifications of the exemplary embodiments will be apparent to those skilled in the art. General principles defined herein may be applied to other exemplary embodiments without departing from the scope of the present disclosure. Therefore, the present disclosure is not limited to the exemplary embodiments presented herein. The present disclosure shall be interpreted within the broadest meaning range consistent to the principles and new characteristics presented herein.

In the present disclosure, a network function and an artificial neural network and a neural network may be interchangeably used.

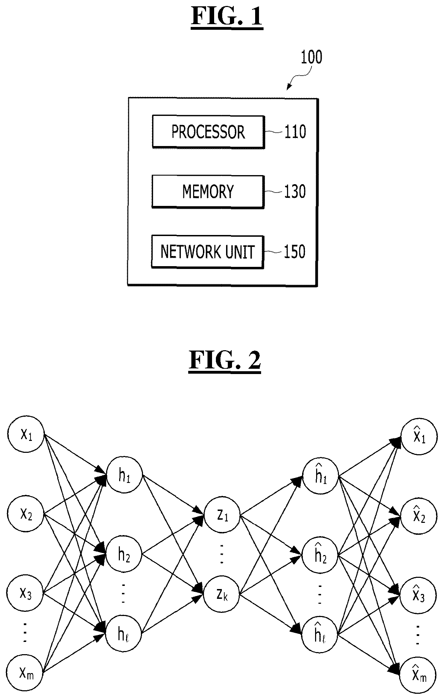

FIG. 1 is a block configuration diagram of a computing device for separation rotating imaging according to an embodiment of the present disclosure.

A configuration of the computing device 100 illustrated in FIG. 1 is only an example shown through simplification. In an exemplary embodiment of the present disclosure, the computing device 100 may include other components for performing a computing configuration of the computing device 100 and only some of the disclosed components may constitute the computing device 100.

The computing device 100 may include a processor 110, a memory 130, and a network unit 150.

The processor 110 may be constituted by one or more cores, and include processors for data analysis and deep learning, such as a central processing unit (CPU), a general purpose graphics processing unit (GPGPU), a tensor processing unit (TPU), etc., of the computing device. The processor 110 may read a computer program stored in the memory 130 and process data for machine learning according to an exemplary embodiment of the present disclosure. According to an exemplary embodiment of the present disclosure, the processor 110 may perform an operation for learning the neural network. The processor 110 may perform calculations for learning the neural network, which include processing of input data for learning in deep learning (DL), extracting a feature in the input data, calculating an error, updating a weight of the neural network using backpropagation, and the like.

At least one of the CPU, the GPGPU, and the TPU of the processor 110 may process learning of the network function. For example, the CPU and the GPGPU may process the learning of the network function and data classification using the network function jointly. In addition, in an exemplary embodiment of the present disclosure, the learning of the network function and the data classification using the network function may be processed by using processors of a plurality of computing devices together. In addition, the computer program performed by the computing device according to an exemplary embodiment of the present disclosure may be a CPU, GPGPU, or TPU executable program.

According to an exemplary embodiment of the present disclosure, the memory 130 may store any type of information generated or determined by the processor 110 and any type of information received by the network unit 150.

According to an exemplary embodiment of the present disclosure, the memory 130 may include at least one type of storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The computing device 100 may operate in connection with a web storage performing a storing function of the memory 130 on the Internet. The description of the memory is just an example and the present disclosure is not limited thereto.

The network unit 150 according to several embodiments of the present disclosure may use various wired communication systems, such as a Public Switched Telephone Network (PSTN), an x Digital Subscriber Line (xDSL), a Rate Adaptive DSL (RADSL), a Multi Rate DSL (MDSL), a Very High Speed DSL (VDSL), a Universal Asymmetric DSL (UADSL), a High Bit Rate DSL (HDSL), and a local area network (LAN).

The network unit 150 presented in the present specification may use various wireless communication systems, such as Code Division Multi Access (CDMA), Time Division Multi Access (TDMA), Frequency Division Multi Access (FDMA), Orthogonal Frequency Division Multi Access (OFDMA), Single Carrier-FDMA (SC-FDMA), and other systems.

In the present disclosure, the network unit 150 may be configured regardless of a communication aspect, such as wired communication and wireless communication, and may be configured by various communication networks, such as a Personal Area Network (PAN) and a Wide Area Network (WAN). Further, the network may be a publicly known World Wide Web (WWW), and may also use a wireless transmission technology used in short range communication, such as Infrared Data Association (IrDA) or Bluetooth.

In the present disclosure, the network unit (150) can utilize various forms of wired and wireless communication systems.

The technologies described in this specification can be used not only in the mentioned networks but also in other networks.

When an element or layer is referred to as "on" or "above" another element or layer, this includes both directly on top of another element or layer as well as with another layer or another element interposed in the middle. On the other hand, when a component is referred to as "directly on" or "directly above" it indicates that there is no other component or layer intervening.

The spatially relative terms "below," "beneath," "lower," "above," "upper," and the like may be used to facilitate the description of one component or its relationship to other components as shown in the drawings. Spatially relative terms should be understood to include different orientations of an element in use or operation in addition to the orientations shown in the drawings.

For example, a component described as "below" or "beneath" another component may be placed "above" another component when the components shown in the drawing are inverted. Thus, the exemplary term "below" can include both below and above orientations. Components may also be oriented in other directions, and accordingly, spatially relative terms may be interpreted according to their orientation.

Further, as used herein, the terms "apparatus" and "device" may often be used interchangeably.

FIG. 2 is a schematic diagram illustrating a network function according to the embodiment of the present disclosure.

Throughout the present specification, the meanings of a calculation model, a nerve network, the network function, and the neural network may be interchangeably used. The neural network may be formed of a set of interconnected calculation units which are generally referred to as "nodes". The "nodes" may also be called "neurons". The neural network consists of one or more nodes. The nodes (or neurons) configuring the neural network may be interconnected by one or more links.

In the neural network, one or more nodes connected through the links may relatively form a relationship of an input node and an output node. The concept of the input node is relative to the concept of the output node, and a predetermined node having an output node relationship with respect to one node may have an input node relationship in a relationship with another node, and a reverse relationship is also available. As described above, the relationship between the input node and the output node may be generated based on the link. One or more output nodes may be connected to one input node through a link, and a reverse case may also be valid.

In the relationship between an input node and an output node connected through one link, a value of the output node data may be determined based on data input to the input node. Herein, a link connecting the input node and the output node may have a weight. The weight is variable, and in order for the neural network to perform a desired function, the weight may be varied by a user or an algorithm. For example, when one or more input nodes are connected to one output node by links, respectively, a value of the output node may be determined based on values input to the input nodes connected to the output node and weights set in the link corresponding to each of the input nodes.

As described above, in the neural network, one or more nodes are connected with each other through one or more links to form a relationship of an input node and an output node in the neural network. A characteristic of the neural network may be determined according to the number of nodes and links in the neural network, a correlation between the nodes and the links, and a value of the weight assigned to each of the links. For example, when there are two neural networks in which the numbers of nodes and links are the same and the weight values between the links are different, the two neural networks may be recognized to be different from each other.

The neural network may consist of a set of one or more nodes. A subset of the nodes configuring the neural network may form a layer. Some of the nodes configuring the neural network may form one layer on the basis of distances from an initial input node. For example, a set of nodes having a distance of n from an initial input node may form n layers. The distance from the initial input node may be defined by the minimum number of links, which need to be passed to reach a corresponding node from the initial input node. However, the definition of the layer is arbitrary for the description, and a degree of the layer in the neural network may be defined by a different method from the foregoing method. For example, the layers of the nodes may be defined by a distance from a final output node.

The initial input node may mean one or more nodes to which data is directly input without passing through a link in a relationship with other nodes among the nodes in the neural network. Otherwise, the initial input node may mean nodes which do not have other input nodes connected through the links in a relationship between the nodes based on the link in the neural network. Similarly, the final output node may mean one or more nodes that do not have an output node in a relationship with other nodes among the nodes in the neural network. Further, the hidden node may mean nodes configuring the neural network, not the initial input node and the final output node.

In the neural network according to the embodiment of the present disclosure, the number of nodes of the input layer may be the same as the number of nodes of the output layer, and the neural network may be in the form that the number of nodes decreases and then increases again from the input layer to the hidden layer. Further, in the neural network according to another embodiment of the present disclosure, the number of nodes of the input layer may be smaller than the number of nodes of the output layer, and the neural network may be in the form that the number of nodes decreases from the input layer to the hidden layer. Further, in the neural network according to another embodiment of the present disclosure, the number of nodes of the input layer may be larger than the number of nodes of the output layer, and the neural network may be in the form that the number of nodes increases from the input layer to the hidden layer. The neural network according to another embodiment of the present disclosure may be the neural network in the form in which the foregoing neural networks are combined.

A deep neural network (DNN) may mean the neural network including a plurality of hidden layers, in addition to an input layer and an output layer. When the DNN is used, it is possible to recognize a latent structure of data. That is, it is possible to recognize latent structures of photos, texts, videos, voice, and music (for example, what objects are in the photos, what the content and emotions of the texts are, and what the content and emotions of the voice are). The DNN may include a convolutional neural network (CNN), a recurrent neural network (RNN), an auto encoder, Generative Adversarial Networks (GAN), a Long Short-Term Memory (LSTM), a transformer, a restricted Boltzmann machine (RBM), a deep belief network (DBN), a Q network, a U network, a Siamese network, a Generative Adversarial Network (GAN), and the like. The foregoing description of the deep neural network is merely illustrative, and the present disclosure is not limited thereto.

In the embodiment of the present disclosure, the network function may include an auto encoder. The auto encoder may be one type of artificial neural network for outputting output data similar to input data. The auto encoder may include at least one hidden layer, and the odd-numbered hidden layers may be disposed between the input/output layers. The number of nodes of each layer may decrease from the number of nodes of the input layer to an intermediate layer called a bottleneck layer (encoding), and then be expanded symmetrically with the decrease from the bottleneck layer to the output layer (symmetric with the input layer). The auto encoder may perform a nonlinear dimension reduction. The number of input layers and the number of output layers may correspond to the dimensions after preprocessing of the input data. In the auto encoder structure, the number of nodes of the hidden layer included in the encoder decreases as a distance from the input layer increases. When the number of nodes of the bottleneck layer (the layer having the smallest number of nodes located between the encoder and the decoder) is too small, the sufficient amount of information may not be transmitted, so that the number of nodes of the bottleneck layer may be maintained in a specific number or more (for example, a half or more of the number of nodes of the input layer and the like).

The neural network may be trained by at least one scheme of supervised learning, unsupervised learning, semi-supervised learning, and reinforcement learning. The training of the neural network may be a process of applying knowledge for the neural network to perform a specific operation to the neural network.

The neural network may be trained in a direction of minimizing an error of an output. In the training of the neural network, training data is repeatedly input to the neural network and an error of an output of the neural network for the training data and a target is calculated, and the error of the neural network is back-propagated in a direction from an output layer to an input layer of the neural network in order to decrease the error, and a weight of each node of the neural network is updated. In the case of the supervised learning, training data labelled with a correct answer (that is, labelled training data) is used, in each training data, and in the case of the unsupervised learning, a correct answer may not be labelled to each training data. That is, for example, the training data in the supervised learning for data classification may be data, in which category is labelled to each of the training data. The labelled training data is input to the neural network and the output (category) of the neural network is compared with the label of the training data to calculate an error. For another example, in the case of the unsupervised learning related to the data classification, training data that is the input is compared with an output of the neural network, so that an error may be calculated. The calculated error is back-propagated in a reverse direction (that is, the direction from the output layer to the input layer) in the neural network, and a connection weight of each of the nodes of the layers of the neural network may be updated according to the backpropagation. A change amount of the updated connection weight of each node may be determined according to a learning rate. The calculation of the neural network for the input data and the backpropagation of the error may configure a learning epoch. The learning rate is differently applicable according to the number of times of repetition of the learning epoch of the neural network. For example, at the initial stage of the learning of the neural network, a high learning rate is used to make the neural network rapidly secure performance of a predetermined level and improve efficiency, and at the latter stage of the learning, a low learning rate is used to improve accuracy.

In the training of the neural network, the training data may be generally a subset of actual data (that is, data to be processed by using the trained neural network), and thus an error for the training data is decreased, but there may exist a learning epoch, in which an error for the actual data is increased. Overfitting is a phenomenon, in which the neural network excessively learns training data, so that an error for actual data is increased. For example, a phenomenon, in which the neural network learning a cat while seeing a yellow cat cannot recognize cats, other than a yellow cat, as cats, is a sort of overfitting. Overfitting may act as a reason of increasing an error of a machine learning algorithm. In order to prevent overfitting, various optimizing methods may be used. In order to prevent overfitting, a method of increasing training data, a regularization method, a dropout method of inactivating a part of nodes of the network during the training process, a method using a bath normalization layer, and the like may be applied.

The separation rotating imaging apparatus described in the present disclosure utilizes a first rotation that causes an object to revolve and a second rotation that causes the object to rotate by a separately equipped device in a specific area, thereby imaging the object at high speed from multiple angles. The imaging may be utilized for poor appearance inspection, heterogeneous inspection, shape inspection, assembly inspection, and alignment inspection. The poor appearance inspection may include a sheet surface stamping defect (or failure), a hole processing defect, a hole clogging defect, or the like. Further, when the object is located in the preset imaging area, the separation rotating imaging apparatus may photograph the object, and further perform an electric inspection to inspect a defect.

Further, the separation rotating imaging apparatus described above may be controlled in driving by a computing device. Meanwhile, in the present disclosure, an artificial neural network model is utilized for an image obtained by an imaging apparatus to perform inspection of an object, so that inspection manpower may be improved, high-speed imaging may be performed for inspection optimized for a tact time in a production process, and a defective product sorting capability for a specific product may be improved. In the present disclosure the tact time may refer to a time required to produce a single product to meet customer demand. The tact time may be calculated by dividing a workable time by a production quantity required by a customer. That is, the tact time is a concept of a target time for achieving a production target required by the customer.

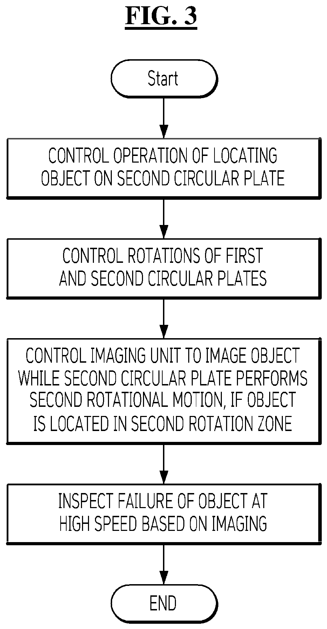

FIG. 3 is a flowchart showing a method for separation rotating imaging performed by the computing device according to an embodiment of the present disclosure. Hereinafter, an operation in which the computing device 100 controls driving of the separation rotating imaging apparatus 1000 will be described with reference to FIG. 2, and the separation rotating apparatus 1000 will be described in more detail with reference to FIGS. 3 to 14. The operation in which the computing device 100 controls the driving of the separation rotating imaging apparatus 1000 may include, but is not limited to, signal transmission and reception, data processing, sensor and actuator control, decision-making control, or the like.

According to an embodiment of the present disclosure, the computing device 100 may control the driving of the separation rotating imaging apparatus 1000 to be described below. Referring to FIG. 2, the separation rotating imaging method may include controlling an operation of locating an object on a second circular plate from either side of a first circular plate (S110), controlling each of a first rotation of the first circular plate and a second rotation of a second circular plate (S120), controlling an imaging unit to image the object while the second circular plate performs the second rotation when the object is located in a second rotation zone (S130), inspecting a defect of the object at a high speed based on the imaging (S140), and the like.

Step S110 is a step of controlling an operation of locating the object on the second circular plate from either side of the first circular plate. Illustratively, the computing device 100 may control an operation so that an object input by an input unit included in the separation rotating imaging apparatus is located (or placed) on the second circular plate. According to an embodiment, the computing device 100 may control driving of the input unit 200. The input unit 200 may include a gripper, a feeder, or the like. The computing device 100 may control driving of the gripper that inputs the object. Further, the computing device 100 may also control the driving of the feeder that transfers the object to a grip region of the gripper prior to the input of the object.

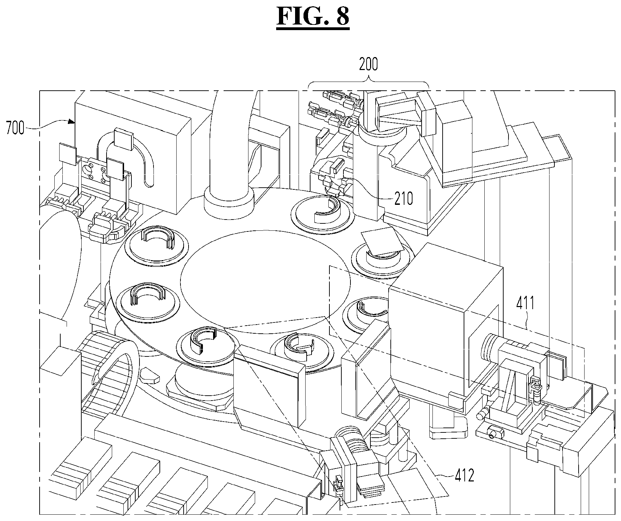

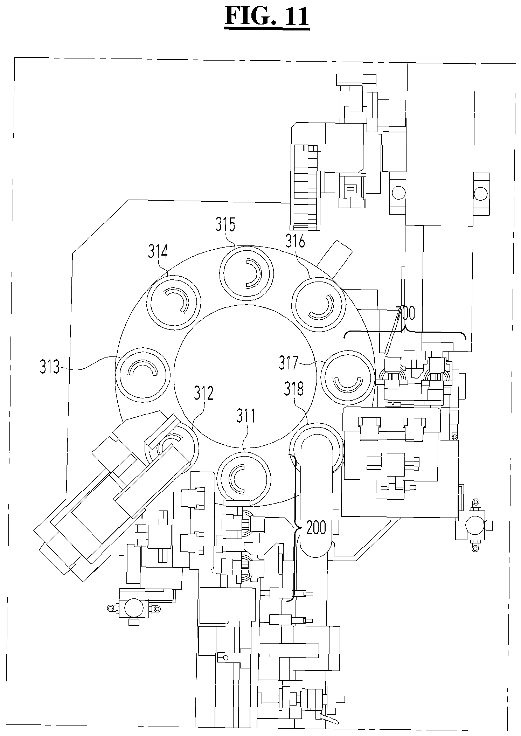

As an example, referring to FIGS. 8 and 11 jointly, the input unit 200 may include a feeder 230 for transferring an object to a grip region 220 of a gripper 210, and the gripper 210 that grips the object transferred to the grip region through the feeder by pressure in both directions and moves the object in a semi-circular arc, U-shaped, a 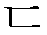 -shaped, a 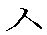 -shaped, W-shaped, m-shaped path, or the like, and locates the object on the second circular plate. Further, according to an embodiment, the gripper 210 may perform an operation of gripping an object transferred and moved to a first grip region 221 by the feeder 230 and moving the object to a second grip region 222, and an operation of griping the object in the second grip regions 222 and locating the object on a second circular plate 320.

Step S120 is a step of controlling each of a first rotation of the first circular plate 310 and a second rotation of the second circular plate 320. Illustratively, the computing device 100 may control different types of rotational motions of the first circular plate 310 and the second circular plate 320. As an example, referring to FIG. 11, the computing device 100 may control the first circular plate 310 to make the first rotation in a clockwise direction. Further, the computing device 100 may control the second circular plate 320 to rotate clockwise or counterclockwise at a different rotational speed than the first rotation. For example, the computing device 100 may separately control a first rotation driver 340 and a second rotation driver 350 such that a plurality of circular plates rotate at different rotational speeds from each other. Here, the plurality of circular plates includes a first circular plate and a second circular plate. As an example, the second rotation driver may be a rotation driving device which is provided separately from the first rotation driver, and is detachable. At this point, the computing device 100 may control the first rotation driver 340 concurrently with the second rotation driver 350.

According to an embodiment, referring back to FIG. 11 , when the object is located on the second circular plate 320 in step S110, the computing device 100 may control the rotational motion of the first circular plate so that the second circular plate 320 starts at a first point 311 and stops at a second point 312. As an example, the computing device 100 may control the rotational motion of the first circular plate so that an interval between the first point 311 and the second point 312 becomes 45°. Further, in the operation in which the first circular plate rotates so that the second circular plate starts at the first point 311 and stops at the second point 312, the computing device 100 may control the rotational motions of the first circular plate and the second circular plate so that the first circular plate rotates and stops for a predetermined time. As an example, the computing device 100 may control rotational motions of the plurality of circular plates so that the first circular plate rotates for 0.4 sec and the first circular plate stops for 0.6 sec.

Referring back to FIGS. 8 and 11, when the object is transferred to the grip region 220 by the feeder and then located on the second circular plate with one grip, an input process of the object in a situation where there is a variation in position or alignment of the object during the process of transferring the object from the feeder to the grip region may result in the occurrence of wear or residue of a product. In view of this, the computing device 100 may utilize a plurality of grippers to control an operation of gripping an object located in a first grip region and moving the object to a second grip region, and an operation of gripping an object located in the second grip region or a separate object and moving the object to the second circular plate.

Step S130 is a step of controlling an imaging unit 400 to image the object while the second circular plate makes a second rotation if the object is located in the second rotation zone. Illustratively, in step S120, the first circular plate repeatedly rotates and stops for a preset time, so that the object is located in the second rotation region and the second circular plate makes the second rotation. Then, the computing device 100 may control the driving of the imaging unit 400 to image the object while the object makes the second rotation jointly with the second circular plate. For example, the imaging unit 400 may include an imaging device. The imaging device may include a vision imaging device. Further, the imaging device may include a side surface imaging device 410, a top surface imaging device 420, or a bottom surface imaging device 430 depending on a usage. For example, if the second circular plate is located in a preset imaging region by the first circular plate which repeatedly rotates and stops in response to a preset interval or time, the computing device 100 may control the imaging device to image the object and the second circular plate jointly while making the second rotation rotate together. Here, the preset imaging region may include at least one of a first imaging region 411 or a second imaging region 412. For example, referring to FIG. 8, when the second circular plate 320 starts at the first point 311, and repeatedly rotates and stops by the rotation and stop operations of the first circular plate, and is located at a third point 313, the computing device 100 may control driving of the vision imaging device. Here, the third point 313 may be the first imaging region 411. Further, when the second circular plate 320 starts at the first point 311, and repeatedly rotates and stops by the rotation and stop operations of the first circular plate, and is located at a fourth point 314, the computing device 100 may control the driving of the vision imaging device. Here, the fourth point 314 may be the second imaging region 412. In this case, the rotation and stop operations of the first circular plate 310 may be performed by receiving rotation power from the first rotation driver 340. As an example, the computing device 100 may simultaneously control driving of a plurality of vision imaging devices, a plurality of second rotation drivers 350, and the first rotation driver 340, so that each of the plurality of second circular plates 320 makes the second rotation in the first imaging region 411 and the second imaging region 412, and at the same time, the plurality of objects respectively located on the plurality of second circular plates 320 are imaged. As an example, when the object imaged in the first imaging region 411 is located in the second imaging region by the rotation and stop operations of the first circular plate 310, the computing device 100 may control the driving of the vision imaging device to re-image the object. For example, the computing device 100 may control the driving according to a correlation between an input period of the input unit 200 for locating the object on the second circular plate and a period of the rotation and stop operations of the first circular plate 310 such that the plurality of objects are respectively imaged by the side imaging device 410 while making the second rotation in the first imaging region 411 and the second imaging region 412, and when a specific object imaged while making the second rotation in the first imaging region 411 is located in the second imaging region 412 by the rotation and stop operations of the first circular plates 310, the specific object is imaged again by the side imaging device 410 that is separate from the side imaging device 410 while making the second rotation or a different type of rotation.

According to an embodiment, when the plurality of imaging regions are configured as in the above example, optimized imaging is possible based on distances between the imaging device and specific parts of the object. A portion of the object to be imaged in each imaging region may be varied according to a range of a subject distance, which is a distance from the imaging device to the object for the imaging device to exhibit an optimal performance.

As another example, the computing device 100 may control the driving according to the correlation between the input period of the input unit 200 for locating the object on the second circular plate and the period of the rotation and stop operations of the first circular plate 310 such that while the object which makes the second rotation is imaged by the side imaging device 410 in the first imaging region 411, a side surface imaging device 410 different from the side surface imaging device 410 does not operate in the second imaging region 412, and then when the object is located in the second imaging region 412 by the rotation and stop operations of the first circular plate, the side imaging device of the second imaging region 412 images the object that makes the second rotation or a rotation of a different type from the second rotation.

According to an embodiment, when the object located on the second circular plate 320 is located in the preset imaging region, the computing device 100 may control the imaging device to image the object. For example, the imaging device may include a top surface imaging device 420 or a bottom surface imaging device 430. For example, if a specific second circular plate is located in a preset imaging region by the first circular plate which repeatedly rotates and stops in response to a preset interval or time, the computing device 100 may control at least one of the top surface imaging device 420, the bottom surface imaging device 430, or the inner surface imaging device 440 so as to image the object. Here, the preset imaging region may be the second point 312. As yet another example, the preset imaging region may include a partial region of a transfer unit 800 located outside the first circular plate. For example, when an object that is recovered from the second circular plate 320 by a recovery unit 700 after being imaged on the second circular plate 320 and is transferred to the transfer unit 800 after being aligned in a form different from an alignment form of the object located on the second circular plate is transferred by the transfer unit 800 and is located in a preset imaging region corresponding to a partial region of the transfer unit 800, the computing device 100 may control the top surface imaging device 420, the bottom surface imaging device 430, or the inner surface imaging device 440 such that a top surface, an inner surface, or a bottom surface is imaged. However, the preset imaging region is not limited thereto, and various embodiments may exist.

Furthermore, according to an embodiment, the computing device 100 may optimize and control operations related to imaging of an object by utilizing an artificial intelligence model. Illustratively, the computing device 100 may control at least one of a rotation speed, a rotation radius, or a rotation interval of the first rotation driver 340 and the second rotation driver 350 by optimizing at least one of the rotation speed, the rotation radius, or the rotation interval of the first rotation driver 340 and the second rotation driver 350 to the imaging of the object. Alternatively, illustratively, the computing device 100 may control at least one of an operation speed, an operation radius, or an operation interval with respect to input, recovery, and transfer operations of the object of the input unit 200, the recovery unit 700, and the transfer unit 800 by optimizing at least one of an operation speed, an operation radius, or an operation interval to the imaging of the object.

According to an embodiment, the computing device 100 may recursively control an inspection based on an imaging result of the object by the artificial intelligence model. As an example, when an object imaging result in step S130 is selected as a re-inspection object by the artificial intelligence model, or when a confidence value for a prediction in relation to the imaging result is determined to be equal to or less than a predetermined threshold, driving may be controlled to rotate the object again and re-inspect the object by the imaging device. As an example, when the imaging result is a re-inspection object or the confidence value for the prediction is determined to be equal to or less than the predetermined threshold with respect to the imaging result, an imaging step may proceed again from a position of the first point 311 by returning to step S120 again without recovering the imaged object by the recovery unit 700 and without inputting a new object into the second circular plate 320 in which the object is located.

Step S140 is a step of inspecting a failure of the object at high speed based on the imaging. As an example, the computing device 100 may perform a poor appearance inspection and a heterogeneous inspection of the object based on the image captured in step S130. Further, the computing device 100 may perform the poor appearance inspection and the heterogeneous inspection of the object based on the image captured by at least one of the side surface imaging device 410, the top surface imaging device 420, the bottom surface imaging device 430, or the inner side surface imaging device 440 in connection with step S130. Illustratively, the computing device 100 may inspect the failure of the object through the poor appearance inspection, the heterogeneous inspection, or the like. That is, the computing device 100 may inspect the failure of the object based on the image captured by the imaging unit 400 by utilizing a deep learning model. Illustratively, the poor appearance inspection may include a scratch defect, a stamping defect, a pressing defect, or the like. An external scratch defect may be classified into a first failure type, an external imaging defect and an external pressing defect may be classified into a second failure type, an internal scratch defect may be classified into a third failure type, and an internal stamping defect and an internal pressing defect may be classified into a fourth failure type. According to the vision imaging, the computing device 100 may classify the type of object into any one of a good product type, a first failure type, a second failure type, a third failure type, or a fourth failure type.

For example, the computing device 100 may detect a failure candidate group based on the image captured by the imaging unit 400 by utilizing the deep learning model. Further, the computing device 100 may detect the failure candidate group based on the image captured by the imaging unit 400 by utilizing a predetermined criterion. As another example, the computing device 100 learns a detection criterion of the failure candidate group by utilizing the deep learning model to detect the failure candidate group based on the image captured by the imaging unit 400.

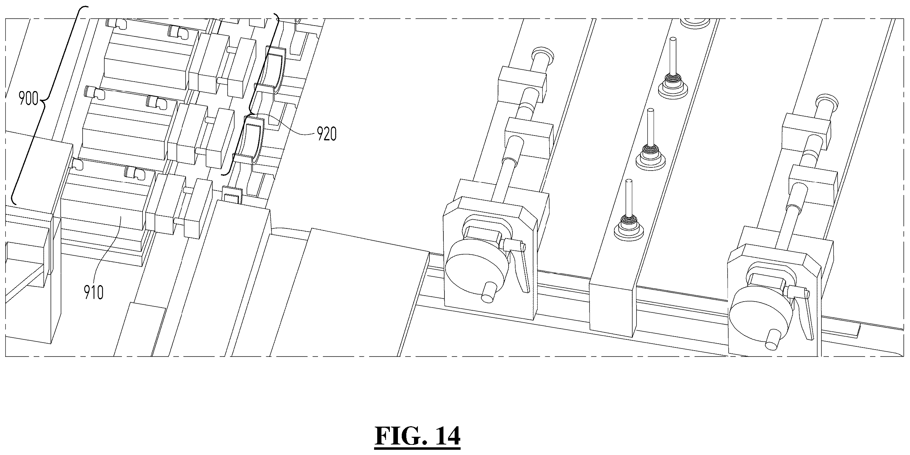

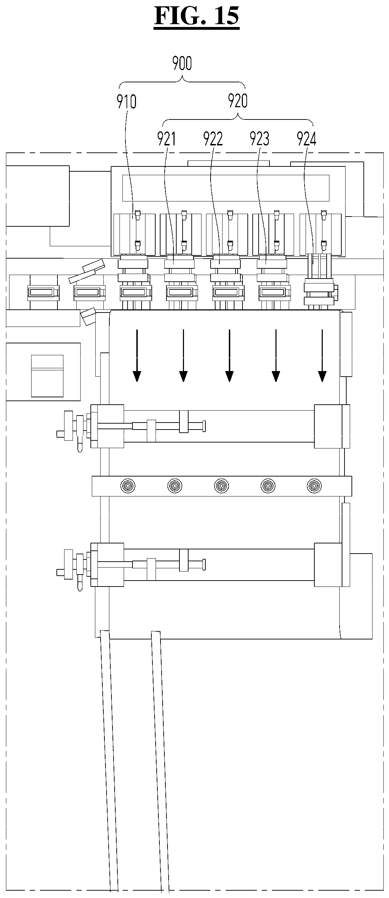

According to an embodiment, the computing device 100 may control an operation of classifying the object for each failure type of the object and controlling an operation of discharging the object to a line differently arranged according to a failure type, based on a result of the inspection in step S140. As an example, referring to FIGS. 14 and 15, the computing device 100 may control an operation of being transferred by a pusher to each line for each failure type according to the classification for each good or failure type of the object located on the transfer unit 800.

Further, the computing device 100 may control a rotational motion of the first circular plate 310 after imaging the object by the first imaging area 411 and the second imaging area 412. For example, the computing device 100 may control the rotational motion of the first circular plate 310 such that after imaging the object in the first imaging area 411 and the second imaging area 412, the second circular plate 320 stops after being rotated to a fifth point 315, stops after being rotated to a sixth point 316, stops after being rotated to a seventh point 317, and stops after being rotated to the first point 311 again by the rotation of the first circular plates 310.

According to an embodiment, when the specific second circular plate 320 is located at the seventh point, the computing device 100 may control the driving so that the object located on the specific circular plate 320 is recovered by the recovery operation of the recovery unit 700. For example, the computing device 100 may control a driving of transferring a specific object to the transfer unit 800 by the recovery operation of the recover unit 700 when the specific object is located on the second circular plate 320 by the input unit 200, and after the second circular plate 320 revolves by repetition of the rotation and stop operations of the first circular plate 310, and the specific object is imaged by the first imaging region 411 and the second imaging region 412, the second circular plate 320 revolves by repetition of the rotation and stop operations of the first circular plate 310, and is located at the seventh point 317. At this time, the computing device 100 may control a driving of transferring the specific object transferred by the recover unit 700 by the transfer unit 800.

As an example, the computing device 100 may control the second circular plate 320 to revolve and to be stopped at an interval of 45° by the first rotation and stop operations of the first circular plate 310 after the object is located on the second circular plate 320. Further, after the object is located on the second circular plate 320, the computing device 100 may control an operation so that the first circular plate 310 makes the first rotation for 0.4 sec and stops for 0.6 sec. The computing device 100 may control the driving of the separation rotating imaging apparatus such that a tact time of 1 sec is required per one object. Illustratively, the computing device 100 may control the driving such that the object located at the first point 311 of the second circular plate 320 by the input unit 200 rotates and is captured in the first imaging region 411, and then also rotates and is captured in the second imaging region 412, by repetition of the revolving and stop operations of the second circular plate 320 by repetition of the rotation and stop operations of the first circular plate 310, and is recovered by the recovery unit 700 and transferred to the transfer unit 800 when being located at the seventh point 317.

As another example, the computing device 100 may control the driving such that the object located at the first point 311 of the second circular plate 320 by the input unit 200 rotates and is captured in the first imaging region 411, and then also rotates and is captured in the second imaging region 412, and is recovered by the recovery unit 700 and transferred to the transfer unit 800 when being located at the seventh point 317 by repetition of the revolving and stop operations of the second circular plate 320 by repetition of the rotation and stop operations of the first circular plate 310.

The steps mentioned in the above description may be further split into additional steps, or combined into fewer steps according to an implementation example of the present disclosure. Further, some steps may also be omitted as necessary, and an order between the steps may be changed.

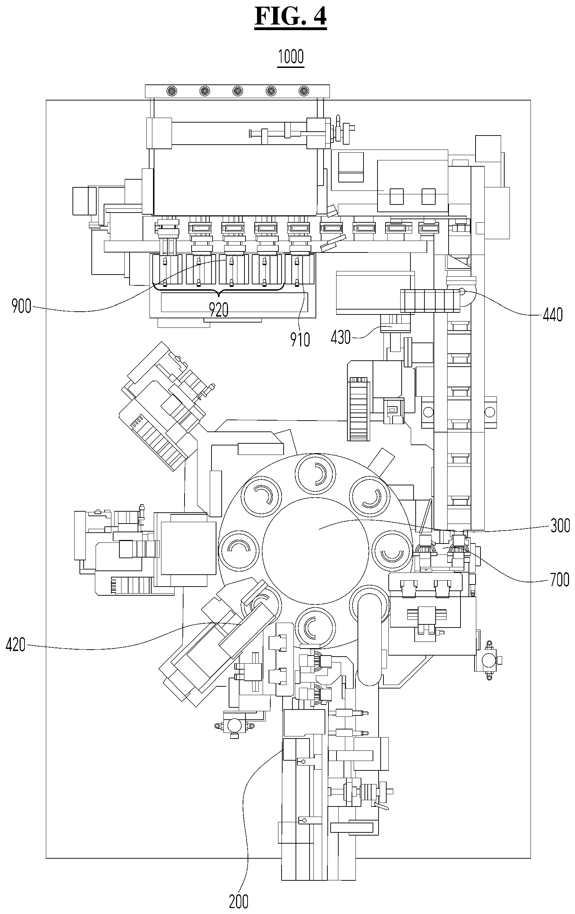

Hereinafter, the separation rotating imaging apparatus will be described in more detail with reference to FIGS. 4 to 16.

FIG. 4 is an overall configuration diagram of a separation rotating imaging apparatus according to an embodiment of the present disclosure.

According to an embodiment of the present disclosure, the separation rotating imaging apparatus 1000 may include an input unit 200, a rotation device 300, an imaging unit 400, and a recovery unit 700. Further, the separating rotating imaging apparatus 1000 may further include a guide rail 500, a fixation unit 600, a transfer unit 800, and a classification unit 900. However, the configuration of the separation rotating imaging apparatus 1000 is not limited thereto, and various modules (units) and the like may be additionally included. Driving each module (unit) may be controlled by the computing device 100. According to an embodiment, the input unit 200 may include a gripper 210, a grip region 220, and a feeder 230, and move the object from the feeder to the second circular plate. Further, the rotation device 300 may include a first circular plate 310, a second circular plate 320, a second rotation zone 330, a first rotation driver 340, and a second rotation driver 350, and make the object to revolve and rotate by a first rotational motion of the first circular plate and a second rotational motion of the second circular plate. Further, the imaging unit 400 may include an imaging device, and capture the object. The imaging device may include at least one of a side surface imaging device 410, a top side imaging device 420, a bottom side imaging device 430, or an inner surface imaging device 440. In addition, the guide rail 500 may include a rail portion 510 and a rail matching portion 520, and when the second circular plate 320 revolves by the first rotation of the first circular plate 310, the guide rail 500 may guide the second circular plate 320 to maintain a direction angle with respect to a center of the first circular plate 310. Further, the fixation unit 600 may include a magnet gripper, and may fix an object located on the second circular plate 320 to the second circular plate 320. In addition, the recovery unit 700 may include the gripper, and may grip the object located on the second circular plate and transfer the gripped object to the transfer unit 800. Further, the transfer unit 800 may transfer the object transferred by the recovery unit 700 to the outside of the rotation device 300. Further, the classification unit 900 may include a good product classification device 910 and a failure classification device 920, and classify the object as a good product or a failure based on a captured image. The defect classification device 920 may classify a failure according to a type of failure. Further, the failure classification device 920 may include at least one of a first failure type classification device 921, a second failure type classification device 922, a third failure type classification device 923, or a fourth failure type classification device 924. The classification unit 900 may further include a component in which, when the object is classified into a good product or an n-th failure type, the object is discharged to a corresponding line based on a classification result.

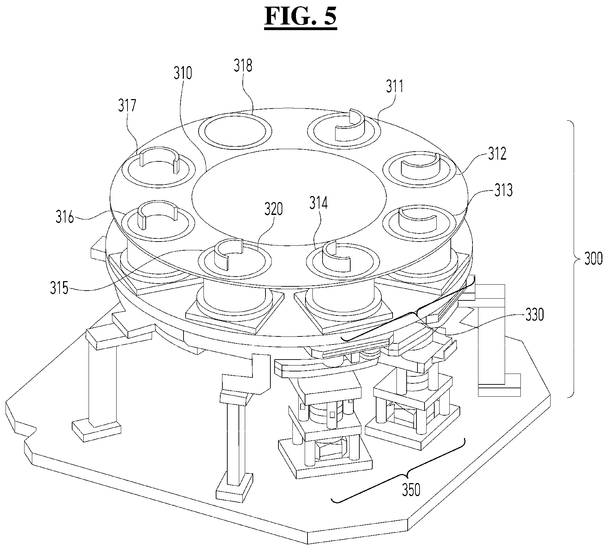

FIG. 5 is a schematic configuration diagram of a rotation device of the separation rotating imaging apparatus according to an embodiment of the present disclosure. The rotation device 300 may make the first rotation and the second rotation for the object. For example, the object may revolve by a first rotation of the first circular plate 310 and rotate by a second rotation of the second circular plate 320.

Illustratively, referring to FIGS. 5, 8, and 11, the object may be input into the second circular plate 320 at the first point 311 of the first circular plate 310. The object may revolve sequentially from the first point 311 to the second point 312, the third point 313, the fourth point 314, the fifth point 315, the sixth point 316, and the seventh point 317, and to the first point 311 again, by repetition of the first rotation and a stop operation of the first circular plate. The first circular plate 310 may make the first rotation by the first rotation driver 340.

In addition, when the second circular plate 320 is located in the second rotation region by the first rotation of the first circular plate 310, the second circular plate may make the second rotation by a separately provided second rotation driver 350. As an example, the second rotation zone may exist at one or more sites on the first circular plate 310, and each separate second rotation driver 350 may be driven in each second rotation zone by the computing device 100. Illustratively, referring to FIGS. 5 and 11, the second rotation zone 330 may exist at one or more sites on the first circular plate. The first circular plate 310 may include the first point 311, the second point 312, the third point 313, the fourth point 314, the fifth point 315, the sixth point 316, the seventh point 317, and the eighth point 318 at an interval of 45°, respectively. As an example, a plurality of second rotation zones 330 may be located near the third point 313 and the fourth point 314.

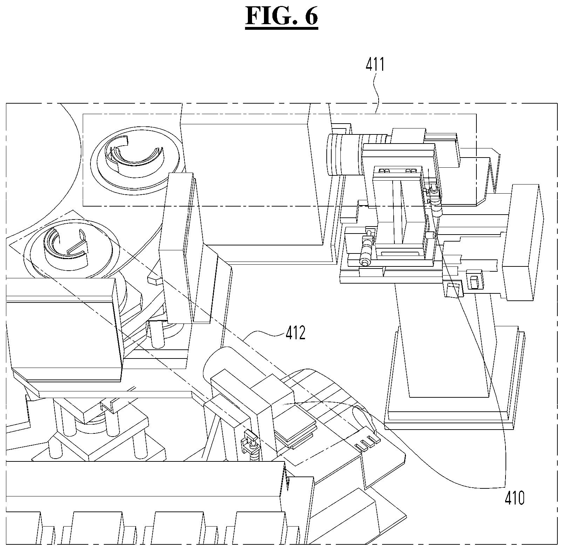

FIG. 6 is a schematic configuration diagram of an imaging region of the separation rotating imaging apparatus according to an embodiment of the present disclosure. The imaging region may include at least one of a first imaging region 411 or a second imaging region 412.

According to an embodiment of the present disclosure, when an object located on the second circular plate 320 is located on the first imaging region 411 by repeating the first rotation and the stop operation of the first circular plate 310, the object may be imaged by the side surface imaging device 410 of the first imaging region 411 while rotating by the second rotation of the second circular plate 320. In addition, after the imaging is performed in the first imaging region 411, when the object is located in the second imaging region 411 by repeating the first rotation and the stop operation of the first circular plate 310, the object may be imaged by the side surface imaging device 410 of the second imaging region 411, while rotating by the second rotation of the second circular plate 320. As an example, referring to FIG. 6, in order to control an imaging environment of the side surface imaging device 410, a shielding film for a viewing angle of the side surface imaging device may be installed. In this case, consistency of a part of the image captured by the side surface imaging device except for the object to be captured may be maintained, thereby improving the imaging accuracy and increasing the processing efficiency of the captured image data.

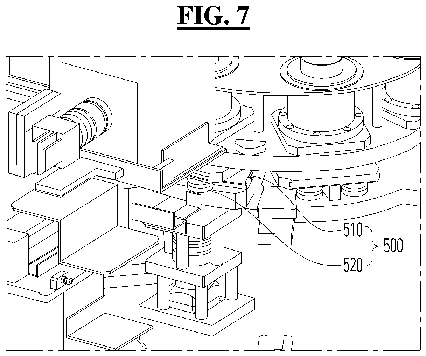

FIG. 7 is a schematic configuration diagram of a guide rail of the separation rotating imaging apparatus according to an embodiment of the present disclosure.

According to an embodiment of the present disclosure, a guide rail 500 may guide movement of the second circular plate 320. The guide rail 500 may be installed at a top or bottom of the first circular plate. For example, the guide rail 500 may include a rail 510 and a rail matching portion 520. The rail matching portion 520 may allow the rail 510 and the second circular plate 320 to be matched with each other, and the rail 510 may guide the second circular plate 320 to move in a circle along a rail path. Illustratively, the guide rail 500 may guide the second circular plate 320 to maintain a predetermined angle with respect to a center of the first circular plate 310 when the second circular plate 320 located on either side of the first circular plate 310 moves in a circle by repetition of the first rotation and the stop operation of the first circular plate 310. As an example, when the second circular plate 320 moves at 45° along an arc of the first circular plate 310 with respect to the center of the first circular plate 310 by the first rotation and the stop operation of the first circular plate 310, the second circular plates 320 may rotate at 45° with respect to the center of the second circular plate 320 by the guide rails 500. According to an embodiment, the guide rail 500 may be installed only at a predetermined portion of the first circular plate. At this time, the second rotation zone 330 may correspond to a zone in which the guide rail 500 is not installed in a region where the second circular plate 320 revolves. Further, the second rotation driver 350 separately provided in a zone where the guide rail 500 is not installed may partially include a guide rail structure, so as to guide the second circular plate 320 in the zone where the guide rail is not installed.

Illustratively, referring to FIG. 7, the guide rail 500 installed on the first circular plate 310 is cut off near a second rotation zone 330, so that the second circular plate 320 may make the second rotation by rotation power of the second rotation driver 350 in the second rotation region 330. Further, the second rotation driver 350 separately provided near the second rotation region 330 where the guide rail 500 is not installed may partially include a guide rail structure, so that the second circular plate 320 may maintain a predetermined angle with respect to the center of the first circular plate 310.

FIG. 8 is a schematic configuration diagram for the input unit, the recovery unit, the rotation device, and the imaging unit of the separation rotating imaging apparatus according to an embodiment of the present disclosure, and FIG. 11 is a schematic configuration diagram for the input unit, the recovery unit, and the rotation device of the separation rotating imaging apparatus according to an embodiment of the present disclosure.

According to an embodiment of the present disclosure, the input unit may move the object from the feeder to the second circular plate. Illustratively, referring to FIGS. 8 and 11, the input unit 200 may locate the object on the second circular plate 320 located at the first point 311. According to an embodiment, the input unit 200 may include a gripper 210, a grip region 220, and a feeder 230, As an example, the input unit 200 may include a feeder 230 for transferring an object to the grip region 220 of the gripper 210, and the gripper 210 that grips the object transferred to the grip region through the feeder and transfers the gripped object in a semi-circular arc, U-shaped, a 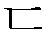 -shaped, a 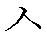 -shaped, W-shaped, m-shaped path, or the like, and locates the object on the second circular plate. As an example, the gripper 210 may perform an operation of gripping an object transferred by the feeder 230 and moved to a first grip region 221 by the feeder 230 and moving the gripped object to a second grip region 222, and an operation of griping the object in the second grip region 222 and locating the object on the second circular plate 320. In addition, the recovery unit 700 may perform an operation opposite to the input unit to recover the object from the second circular plate 320 and locate the recovered object to the transfer unit 800.

Illustratively, referring to FIG. 11, a specific second circular plate 320 may move to the second point 312, the third point 313, the fourth point 314, the fifth point 315, the sixth point 316, and the seventh point 317, and the eighth point 318 sequentially by the first rotation and the stop operation of the first circular plate 310. At this time, an object may be input into the second circular plate 320 by the input unit 200 at the first point 311, and when the second circular plate is located at the third point 313 through the second point 312, the second circular plate 320 may make the second rotation and the object may be imaged, and then when the second circular plate 320 is located at the third point 313, the second circular plates 320 may make the second rotation and the object may be imaged, and then when the second circular plate 320 is located at the fourth point 314, the second circular plate 320 may make the second rotation again and the object may be imaged, and then when the second circular plate 320 is located at the seventh point 317 via the fifth point 315 and the sixth point 316, the object on the second circular plate 320 may be recovered by the recovery unit 700, and then the second circular plate 320 may return to the first point 311 again via the eighth point 318.

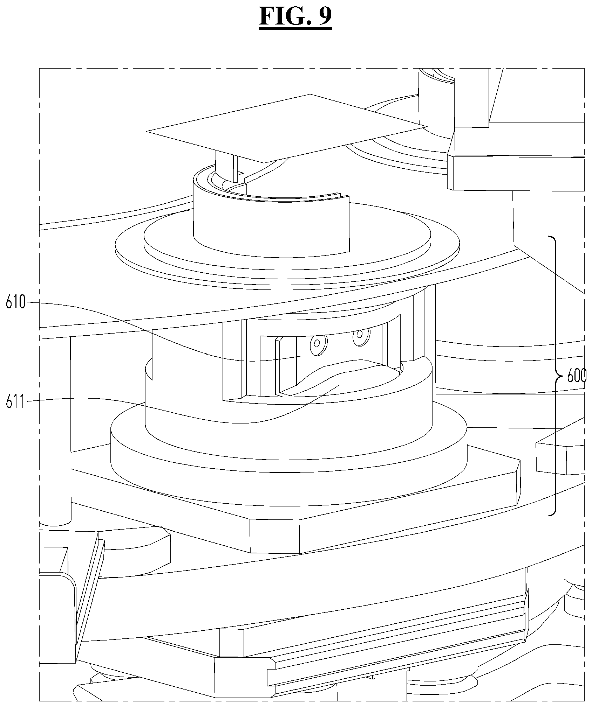

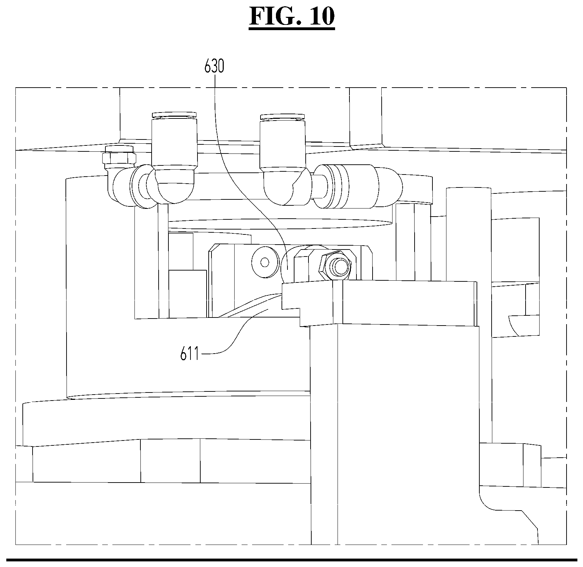

FIG. 9 is a schematic configuration diagram for a fixation unit of the separation rotating imaging apparatus according to an embodiment of the present disclosure, and FIG. 10 is a schematic configuration diagram for the fixation unit near the recovery unit of the separation rotating imaging apparatus according to an embodiment of the present disclosure.

According to an embodiment of the present disclosure, the fixation unit may fix the object to the second circular plate for a predetermined time. The apparatus of the present disclosure may include a fixation unit configured to at least temporarily fix the object to the second circular plate. The object may be fixed by the fixation unit, and revolve and rotate in conjunction with the second circular plate 320. The fixation unit 600 may include a magnet gripper and a spring that are magnetic. The spring is not represented in the figure, but may be installed inside the fixation unit. As an example, the spring may be installed inside the fixation unit 600 and at a lower end of the magnet gripper 610. Illustratively, the spring may push up the magnet gripper 610 in a vertically upward direction. At this time, the magnet gripper 610 may fix an object located on the second circular plate 320 by a magnetic force. As an example, the object may be a ferromagnetic object. The ferromagnetic object may include iron, iron oxide, nickel, cobalt, chromium oxide, ferrite, a magnetic alloy, or the like.

Illustratively, referring to FIG. 9, the magnet gripper 610 is closely attached to a top surface of the second circular plate 320 by the spring 620 that pushes up the magnet gripper 610, so that the magnetic force of the magnet gripper 610 may fix the object located on the second circular plate 320.

Illustratively, referring to FIG. 10, near the recovery unit 700, the magnet gripper 610 may move away from the object, so that the object may not be fixed to the second circular plate 320. As an example, when the spring 620, which is installed at the lower end of the magnet gripper 610 located at the lower end of the second circular plate 320 and pushes up the magnet gripper 610 in the vertically upward direction, contracts due to an external force, the magnet gripper 610 may descend vertically downward and move away from the object located on the second circular plate. In this case, a distance of the magnet gripper to the object is increased, so that the magnetic force is reduced and the object may not be fixed. As an example, the external force that contracts the spring 620 may be generated by a repulsive force between an uphill and downhill structure 611 configured on either side of the magnet gripper and a convex portion 630 installed near the recovery unit. Illustratively, the up and downhill structure 611 may be a trapezoidal, curved-cornered trapezoidal, or upwardly-convex curved pedestal configured on either side of the magnet gripper 610. Illustratively, the convex portion 630 may be a convex configuration in a form of a cylinder, an elliptical cylinder, or a semi-cylinder fixed near the recovery unit 700. According to an embodiment, while the convex portion 630 fixed in position abuts against the uphill and downhill structure 611 configured on either side of the magnet gripper 610 as the first circular plate 310 makes the first rotation, and in a process that the convex portion 630 is located on the upwardly convex portion of the uphill and downhill structure 611 by the first rotation, the repulsive force between the convex portion 630 and the uphill and downhill structure 611 causes the magnet gripper 610 to receive the external force in the vertically downward direction, and the external force greater than an elastic force of the spring 620 on the magnet gripper 610 causes the magnetic gripper 610 to descend in the vertically lower direction. At this time, the distance between the magnet gripper 610 and the object on the second circular plate 320 located at an upper end of the magnet gripper is increased, so that the magnetic force between the magnet grippers 610 and the object is reduced, and the object may not be fixed to the second circular plate 320.

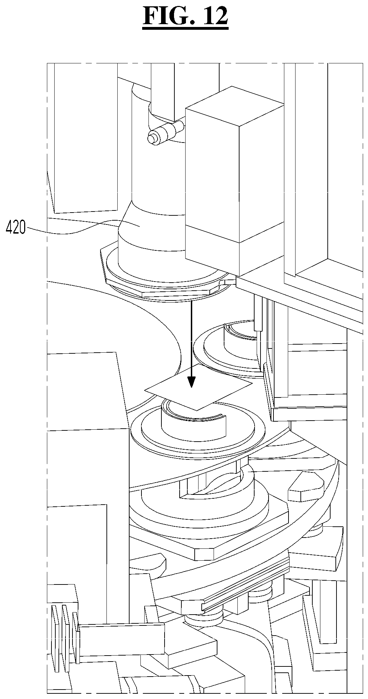

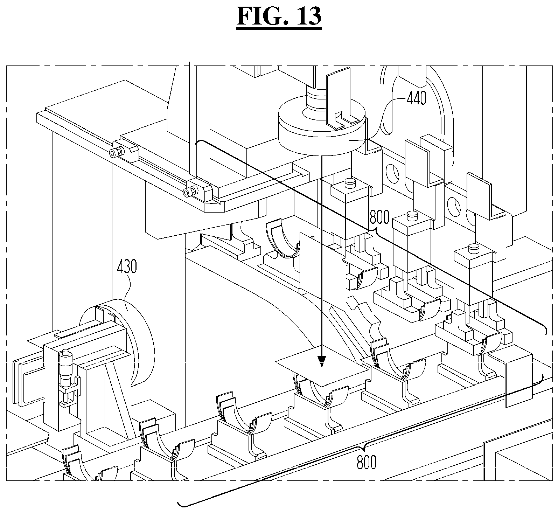

FIG. 12 is a schematic configuration diagram for a top surface imaging device of the separation rotating imaging apparatus according to an embodiment of the present disclosure, and FIG. 13 is a schematic configuration diagram for a bottom surface imaging device and an inner surface imaging device of the separation rotating imaging apparatus according to an embodiment of the present disclosure.

According to an embodiment of the present disclosure, the top surface imaging device may image a top surface of an object. For example, the top surface imaging device 420 may be installed on either side of a predetermined first circular plate. Further, the bottom surface imaging device may image a bottom surface of the object. For example, the bottom surface imaging device 430 may be installed on either side of a predetermined transfer unit 800. As an example, the bottom surface imaging device 430 may be installed in a direction of viewing the transfer unit 800 on a side surface of the transfer unit 800. In addition, the inner surface imaging device may image the inner surface of the object. For example, the inner surface imaging device 440 may be installed on either side of a predetermined transfer unit 800. As an example, the inner surface imaging device 440 may be installed in a direction of viewing the transfer unit 800 above the transfer unit 800.

Illustratively, referring to FIGS. 8 and 12, the top surface imaging device 420 may be installed so that the top surface of the object is imaged at the second point 312. However, the top surface imaging device may be installed even at any portion of an n-th point on the first circular plate 310, or also installed at either side of the transfer unit 800. A position of the top surface imaging device 420 is not limited to the presented embodiment.

Illustratively, referring to FIGS. 4 and 13, since the object is moved to the transfer unit 800 by the recovery unit 700, and alignment of the object is changed, and the bottom surface of the object is exposed by the changed alignment, the bottom surface of the object may be imaged by the bottom surface imaging device 430 installed on the side surface of the transfer unit 800. However, a position of the bottom surface imaging device is not limited to the presented embodiment, and the bottom surface imaging device may be installed at various positions where the bottom surface the object is enabled to be imaged.

Illustratively, referring to FIG. 13, since the object is moved to the transfer unit 800 by the recovery unit 700, and alignment of the object is changed, and the inner surface of the object may be imaged by the inner surface imaging device 440 installed on an upper end of the transfer unit 800. However, a position of the inner surface imaging device is not limited to the presented embodiment, and the inner surface imaging device may be installed at various positions where the inner surface the object is enabled to be imaged.

FIG. 14 is a schematic configuration diagram for the classification unit of the separation rotating imaging apparatus according to an embodiment of the present disclosure, and FIG. 15 is a schematic configuration diagram for an entirety of the classification unit of the separation rotating imaging apparatus according to an embodiment of the present disclosure.

According to an embodiment of the present disclosure, the classification unit may inspect a failure of an object based on an image captured by an imaging apparatus. For example, the classification unit may classify a failure by utilizing a rule-based model or an artificial intelligence model. Illustratively, the rule-based model may classify the failure based on a predetermined failure criterion. As an example, the rule-based model may classify the failure based on a criterion of the failure related to a degree of stamping, a degree of scratch, a degree of contamination, a degree of crush, a degree of symmetry, or the like.

The classification unit may inspect a failure of an object based on the image captured by the imaging apparatus by utilizing a deep learning model. Alternatively, the classification unit may inspect the failure of the object according to a criterion set based on the image captured by the imaging apparatus. According to an embodiment, the classification unit may learn a criterion of the failure of the object by utilizing the deep learning model, and inspect the failure of the object based on the criterion of the failure set based on the learning. Illustratively, the classification unit may perform at least one of binary classification of whether an object corresponds to a failure or multi-class classification of what type of failure the object corresponds to by utilizing the artificial intelligence model.

Illustratively, the artificial intelligence model used for classifying the failure may be a model such as a convolutional neural network (CNN), deep learning based anomaly detection, unsupervised learning, or object detection. As an example, an algorithm such as convolution, pooling, Faster R-CNN, You Only Look Once (YOLO), Single Shot Multi Detector (SSD), LeNet, AlexNet, VGGNet, GoogLeNet, or ResNet may be utilized in the artificial intelligence model used for classifying the failure. Additionally, Multi-channel Image, GAN-based Synthetic Image Generation or Few-shot Learning may be utilized to maximize the performance of the artificial intelligence model. However, the artificial intelligence model used for the classification of the failure is not limited to the above-mentioned artificial intelligence model and algorithm, and includes an artificial intelligence model that is developed in the future or an artificial intelligence model usable for the classification of the failure by those skilled in the art in addition to the mentioned models.

As an example, the classification unit 900 may include a good product classification device 910 and a failure type classification device 920. The good product classification device 910 may be a device that classifies an object that is inspected as not being the failure according to the criterion set based on the image captured by the imaging apparatus. The failure type classification device 920 may be a device that classifies an object that is inspected as being the failure according to the criterion set based on the image captured by the imaging apparatus. As an example, the failure type classification device 920 may include at least one of a first failure type classification device 921, a second failure type classification device 922, a third failure type classification device 923, or a fourth failure type classification device 924. Illustratively, the first failure type classification device 921 may classify an object having an external scratch defect, the second failure type classification device 922, may classify an object having an external stamping defect or a pressing defect, the third defect type classification device 923 may classify an object having an internal scratch defect, and the fourth defect type classification device 924 may classify an object having an internal stamping or pressing defect. According to an embodiment, the n-th failure type classification device may include a pusher that moves the object located in the transfer unit 800 to each line for each good product or failure type.

Illustratively, referring to FIG. 15, in a process in which the object is located in the transfer unit 800 and transferred, if the good product classification device 910 classifies the object as a good product according to the criterion set based on the image captured by the imaging apparatus, the object may be moved to a line provided separately from the transfer unit 800 by the pusher. In this case, the line may be a line to which only the object as the good product is moved. Further, in the process in which the object is located in the transfer unit 800 and transferred, if the first failure type classification device 921 classifies the object as a first failure type according to the criterion set based on the image captured by the imaging apparatus, the object may be moved to a specific line provided separately from the transfer unit 800 by the pusher. In this case, the specific line may be a specific line to which only the object of the first failure type is moved. Further, in the process in which the object is located in the transfer unit 800 and transferred, if the second failure type classification device 922 classifies the object as a second failure type according to the criterion set based on the image captured by the imaging apparatus, the object may be moved to a specific line provided separately from the transfer unit 800 by the pusher. In this case, the specific line may be a specific line to which only the object of the second failure type is moved. Further, in the process in which the object is located in the transfer unit 800 and transferred, if the third failure type classification device 923 classifies the object as a third failure type according to the criterion set based on the image captured by the imaging apparatus, the object may be moved to a specific line provided separately from the transfer unit 800 by the pusher. In this case, the specific line may be a specific line to which only the object of the third failure type is moved. Further, in the process in which the object is located in the transfer unit 800 and transferred, if the fourth failure type classification device 924 classifies the object as a fourth failure type according to the criterion set based on the image captured by the imaging apparatus, the object may be moved to a specific line provided separately from the transfer unit 800 by the pusher. In this case, the specific line may be a specific line to which only the object of the fourth failure type is moved.

In the meantime, according to an embodiment of the present disclosure, a computer readable medium storing a data structure is disclosed.

The data structure may refer to organization, management, and storage of data that enable efficient access and modification of data. The data structure may refer to organization of data for solving a specific problem (for example, data search, data storage, and data modification in the shortest time). The data structure may also be defined with a physical or logical relationship between the data elements designed to support a specific data processing function. A logical relationship between data elements may include a connection relationship between user defined data elements. A physical relationship between data elements may include an actual relationship between the data elements physically stored in a computer readable storage medium (for example, a permanent storage device). In particular, the data structure may include a set of data, a relationship between data, and a function or a command applicable to data. Through the effectively designed data structure, the computing device may perform a calculation while minimally using resources of the computing device. In particular, the computing device may improve efficiency of calculation, reading, insertion, deletion, comparison, exchange, and search through the effectively designed data structure.

The data structure may be divided into a linear data structure and a non-linear data structure according to the form of the data structure. The linear data structure may be the structure in which only one data is connected after one data. The linear data structure may include a list, a stack, a queue, and a deque. The list may mean a series of dataset in which order exists internally. The list may include a linked list. The linked list may have a data structure in which data is connected in a method in which each data has a pointer and is linked in a single line. In the linked list, the pointer may include information about the connection with the next or previous data. The linked list may be expressed as a single linked list, a double linked list, and a circular linked list according to the form. The stack may have a data listing structure with limited access to data. The stack may have a linear data structure that may process (for example, insert or delete) data only at one end of the data structure. The data stored in the stack may have a data structure (Last In First Out, LIFO) in which the later the data enters, the sooner the data comes out. The queue is a data listing structure with limited access to data, and may have a data structure (First In First Out, FIFO) in which the later the data is stored, the later the data comes out, unlike the stack. The deque may have a data structure that may process data at both ends of the data structure.

The non-linear data structure may be the structure in which the plurality of data is connected after one data. The non-linear data structure may include a graph data structure. The graph data structure may be defined with a vertex and an edge, and the edge may include a line connecting two different vertexes. The graph data structure may include a tree data structure. The tree data structure may be the data structure in which a path connecting two different vertexes among the plurality of vertexes included in the tree is one. That is, the tree data structure may be the data structure in which a loop is not formed in the graph data structure.

Throughout the present specification, a calculation model, a nerve network, the network function, and the neural network may be used with the same meaning. Hereinafter, the terms of the calculation model, the nerve network, the network function, and the neural network are unified and described with a neural network. The data structure may include a neural network. Further, the data structure including the neural network may be stored in a computer readable medium. The data structure including the neural network may also include preprocessed data for processing by the neural network, data input to the neural network, a weight of the neural network, a hyper-parameter of the neural network, data obtained from the neural network, an active function associated with each node or layer of the neural network, and a loss function for training of the neural network. The data structure including the neural network may include predetermined configuration elements among the disclosed configurations. That is, the data structure including the neural network may include the entirety or a predetermined combination of pre-processed data for processing by neural network, data input to the neural network, a weight of the neural network, a hyper parameter of the neural network, data obtained from the neural network, an active function associated with each node or layer of the neural network, and a loss function for training the neural network. In addition to the foregoing configurations, the data structure including the neural network may include predetermined other information determining a characteristic of the neural network. Further, the data structure may include all type of data used or generated in a computation process of the neural network, and is not limited to the foregoing matter. The computer readable medium may include a computer readable recording medium and/or a computer readable transmission medium. The neural network may be formed of a set of interconnected calculation units which are generally referred to as "nodes". The "nodes" may also be called "neurons." The neural network consists of one or more nodes.

The data structure may include data input to the neural network. The data structure including the data input to the neural network may be stored in the computer readable medium. The data input to the neural network may include training data input in the training process of the neural network and/or input data input to the training completed neural network. The data input to the neural network may include data that has undergone pre-processing and/or data to be pre-processed. The pre-processing may include a data processing process for inputting data to the neural network. Accordingly, the data structure may include data to be pre-processed and data generated by the pre-processing. The foregoing data structure is merely an example, and the present disclosure is not limited thereto.

The data structure may include a weight of the neural network (in the present specification, weights and parameters may be used with the same meaning), Further, the data structure including the weight of the neural network may be stored in the computer readable medium. The neural network may include a plurality of weights. The weight is variable, and in order for the neural network to perform a desired function, the weight may be varied by a user or an algorithm. For example, when one or more input nodes are connected to one output node by links, respectively, the output node may determine a data value output from the output node based on values input to the input nodes connected to the output node and the weight set in the link corresponding to each of the input nodes. The foregoing data structure is merely an example, and the present disclosure is not limited thereto.

For a non-limited example, the weight may include a weight varied in the neural network training process and/or the weight when the training of the neural network is completed. The weight varied in the neural network training process may include a weight at a time at which a training cycle starts and/or a weight varied during a training cycle. The weight when the training of the neural network is completed may include a weight of the neural network completing the training cycle. Accordingly, the data structure including the weight of the neural network may include the data structure including the weight varied in the neural network training process and/or the weight when the training of the neural network is completed. Accordingly, it is assumed that the weight and/or a combination of the respective weights are included in the data structure including the weight of the neural network. The foregoing data structure is merely an example, and the present disclosure is not limited thereto.

The data structure including the weight of the neural network may be stored in the computer readable storage medium (for example, a memory and a hard disk) after undergoing a serialization process. The serialization may be the process of storing the data structure in the same or different computing devices and converting the data structure into a form that may be reconstructed and used later. The computing device may serialize the data structure and transceive the data through a network. The serialized data structure including the weight of the neural network may be reconstructed in the same or different computing devices through deserialization. The data structure including the weight of the neural network is not limited to the serialization. Further, the data structure including the weight of the neural network may include a data structure (for example, in the non-linear data structure, B-Tree, Trie, m-way search tree, AVL tree, and Red-Black Tree) for improving efficiency of the calculation while minimally using the resources of the computing device. The foregoing matter is merely an example, and the present disclosure is not limited thereto.

The data structure may include a hyper-parameter of the neural network. The data structure including the hyper-parameter of the neural network may be stored in the computer readable medium. The hyper-parameter may be a variable varied by a user. The hyper-parameter may include, for example, a learning rate, a cost function, the number of times of repetition of the training cycle, weight initialization (for example, setting of a range of a weight value to be weight-initialized), and the number of hidden units (for example, the number of hidden layers and the number of nodes of the hidden layer). The foregoing data structure is merely an example, and the present disclosure is not limited thereto.

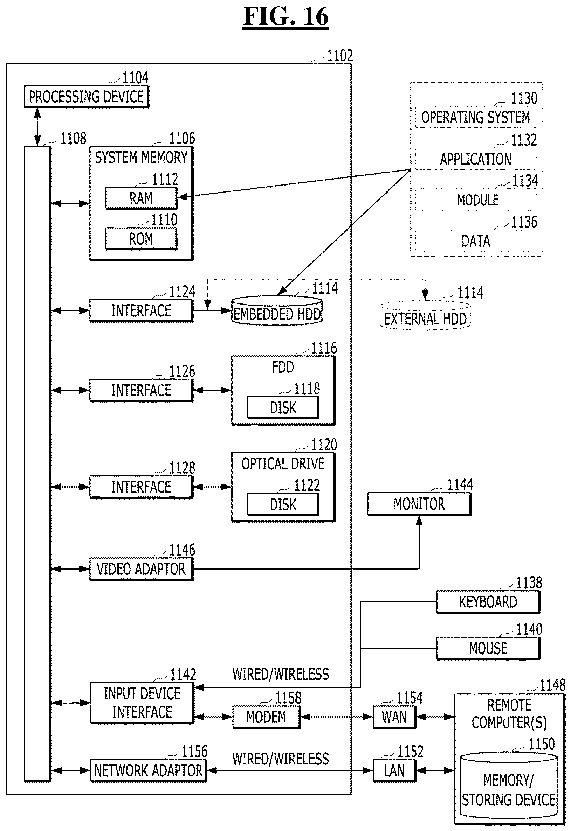

FIG. 16 is a simple and general schematic diagram illustrating an example of a computing environment in which the embodiments of the present disclosure are implementable.

The present disclosure has been described as being generally implementable by the computing device, but those skilled in the art will appreciate well that the present disclosure is combined with computer executable commands and/or other program modules executable in one or more computers and/or be implemented by a combination of hardware and software.

In general, a program module includes a routine, a program, a component, a data structure, and the like performing a specific task or implementing a specific abstract data form. Further, those skilled in the art will well appreciate that the method of the present disclosure may be carried out by a personal computer, a hand-held computing device, a microprocessor-based or programmable home appliance (each of which may be connected with one or more relevant devices and be operated), and other computer system configurations, as well as a single-processor or multiprocessor computer system, a mini computer, and a main frame computer.

The embodiments of the present disclosure may be carried out in a distribution computing environment, in which certain tasks are performed by remote processing devices connected through a communication network. In the distribution computing environment, a program module may be located in both a local memory storage device and a remote memory storage device.

The computer generally includes various computer readable media. The computer accessible medium may be any type of computer readable medium, and the computer readable medium includes volatile and non-volatile media, transitory and non-transitory media, and portable and non-portable media. As a non-limited example, the computer readable medium may include a computer readable storage medium and a computer readable transport medium. The computer readable storage medium includes volatile and non-volatile media, transitory and non-transitory media, and portable and non-portable media constructed by a predetermined method or technology, which stores information, such as a computer readable command, a data structure, a program module, or other data. The computer readable storage medium includes a RAM, a Read Only Memory (ROM), an Electrically Erasable and Programmable ROM (EEPROM), a flash memory, or other memory technologies, a Compact Disc (CD)-ROM, a Digital Video Disk (DVD), or other optical disk storage devices, a magnetic cassette, a magnetic tape, a magnetic disk storage device, or other magnetic storage device, or other predetermined media, which are accessible by a computer and are used for storing desired information, but is not limited thereto.

The computer readable transport medium generally implements a computer readable command, a data structure, a program module, or other data in a modulated data signal, such as a carrier wave or other transport mechanisms, and includes all of the information transport media. The modulated data signal means a signal, of which one or more of the characteristics are set or changed so as to encode information within the signal. As a non-limited example, the computer readable transport medium includes a wired medium, such as a wired network or a direct-wired connection, and a wireless medium, such as sound, Radio Frequency (RF), infrared rays, and other wireless media. A combination of the predetermined media among the foregoing media is also included in a range of the computer readable transport medium.

An illustrative environment 1100 including a computer 1102 and implementing several aspects of the present disclosure is illustrated, and the computer 1102 includes a processing device 1104, a system memory 1106, and a system bus 1108. The system bus 1108 connects system components including the system memory 1106 (not limited) to the processing device 1104. The processing device 1104 may be a predetermined processor among various commonly used processors. A dual processor and other multiprocessor architectures may also be used as the processing device 1104.

The system bus 1108 may be a predetermined one among several types of bus structure, which may be additionally connectable to a local bus using a predetermined one among a memory bus, a peripheral device bus, and various common bus architectures. The system memory 1106 includes a ROM 1110, and a RAM 1112. A basic input/output system (BIOS) is stored in a non-volatile memory 1110, such as a ROM, an EPROM, and an EEPROM, and the BIOS includes a basic routing helping a transport of information among the constituent elements within the computer 1102 at a time, such as starting. The RAM 1112 may also include a high-rate RAM, such as a static RAM, for caching data.

The computer 1102 also includes an embedded hard disk drive (HDD) 1114 (for example, enhanced integrated drive electronics (EIDE) and serial advanced technology attachment (SATA)) - the embedded HDD 1114 being configured for exterior mounted usage within a proper chassis (not illustrated) - a magnetic floppy disk drive (FDD) 1116 (for example, which is for reading data from a portable diskette 1118 or recording data in the portable diskette 1118), and an optical disk drive 1120 (for example, which is for reading a CD-ROM disk 1122, or reading data from other high-capacity optical media, such as a DVD, or recording data in the high-capacity optical media). A hard disk drive 1114, a magnetic disk drive 1116, and an optical disk drive 1120 may be connected to a system bus 1108 by a hard disk drive interface 1124, a magnetic disk drive interface 1126, and an optical drive interface 1128, respectively. An interface 1124 for implementing an outer mounted drive includes, for example, at least one of or both a universal serial bus (USB) and the Institute of Electrical and Electronics Engineers (IEEE) 1394 interface technology.

The drives and the computer readable media associated with the drives provide non-volatile storage of data, data structures, computer executable commands, and the like. In the case of the computer 1102, the drive and the medium correspond to the storage of random data in an appropriate digital form. In the description of the computer readable media, the HDD, the portable magnetic disk, and the portable optical media, such as a CD, or a DVD, are mentioned, but those skilled in the art will well appreciate that other types of computer readable media, such as a zip drive, a magnetic cassette, a flash memory card, and a cartridge, may also be used in the illustrative operation environment, and the predetermined medium may include computer executable commands for performing the methods of the present disclosure.

A plurality of program modules including an operation system 1130, one or more application programs 1132, other program modules 1134, and program data 1136 may be stored in the drive and the RAM 1112. An entirety or a part of the operation system, the application, the module, and/or data may also be cached in the RAM 1112. It will be well appreciated that the present disclosure may be implemented by several commercially usable operation systems or a combination of operation systems.

A user may input a command and information to the computer 1102 through one or more wired/wireless input devices, for example, a keyboard 1138 and a pointing device, such as a mouse 1140. Other input devices (not illustrated) may be a microphone, an IR remote controller, a joystick, a game pad, a stylus pen, a touch screen, and the like. The foregoing and other input devices are frequently connected to the processing device 1104 through an input device interface 1142 connected to the system bus 1108, but may be connected by other interfaces, such as a parallel port, an IEEE 1394 serial port, a game port, a USB port, an IR interface, and other interfaces.

A monitor 1144 or other types of display devices are also connected to the system bus 1108 through an interface, such as a video adaptor 1146. In addition to the monitor 1144, the computer generally includes other peripheral output devices (not illustrated), such as a speaker and a printer.

The computer 1102 may be operated in a networked environment by using a logical connection to one or more remote computers, such as remote computer(s) 1148, through wired and/or wireless communication. The remote computer(s) 1148 may be a work station, a computing device computer, a router, a personal computer, a portable computer, a microprocessor-based entertainment device, a peer device, and other general network nodes, and generally includes some or an entirety of the constituent elements described for the computer 1102, but only a memory storage device 1150 is illustrated for simplicity. The illustrated logical connection includes a wired/wireless connection to a local area network (LAN) 1152 and/or a larger network, for example, a wide area network (WAN) 1154. The LAN and WAN networking environments are general in an office and a company, and make an enterprise-wide computer network, such as an Intranet, easy, and all of the LAN and WAN networking environments may be connected to a worldwide computer network, for example, the Internet.

When the computer 1102 is used in the LAN networking environment, the computer 1102 is connected to the local network 1152 through a wired and/or wireless communication network interface or an adaptor 1156. The adaptor 1156 may make wired or wireless communication to the LAN 1152 easy, and the LAN 1152 also includes a wireless access point installed therein for the communication with the wireless adaptor 1156. When the computer 1102 is used in the WAN networking environment, the computer 1102 may include a modem 1158, is connected to a communication computing device on a WAN 1154, or includes other means setting communication through the WAN 1154 via the Internet. The modem 1158, which may be an embedded or outer-mounted and wired or wireless device, is connected to the system bus 1108 through a serial port interface 1142. In the networked environment, the program modules described for the computer 1102 or some of the program modules may be stored in a remote memory/storage device 1150. The illustrated network connection is illustrative, and those skilled in the art will appreciate well that other means setting a communication link between the computers may be used.

The computer 1102 performs an operation of communicating with a predetermined wireless device or entity, for example, a printer, a scanner, a desktop and/or portable computer, a portable data assistant (PDA), a communication satellite, predetermined equipment or place related to a wirelessly detectable tag, and a telephone, which is disposed by wireless communication and is operated. The operation includes a wireless fidelity (Wi-Fi) and Bluetooth wireless technology at least. Accordingly, the communication may have a pre-defined structure, such as a network in the related art, or may be simply ad hoc communication between at least two devices.

The Wi-Fi enables a connection to the Internet and the like even without a wire. The Wi-Fi is a wireless technology, such as a cellular phone, which enables the device, for example, the computer, to transmit and receive data indoors and outdoors, that is, in any place within a communication range of a base station. A Wi-Fi network uses a wireless technology, which is called IEEE 802.11 (a, b, g, etc.) for providing a safe, reliable, and high-rate wireless connection. The Wi-Fi may be used for connecting the computer to the computer, the Internet, and the wired network (IEEE 802.3 or Ethernet is used). The Wi-Fi network may be operated at, for example, a data rate of 11 Mbps (802.11a) or 54 Mbps (802.11b) in an unauthorized 2.4 and 5 GHz wireless band, or may be operated in a product including both bands (dual bands).

Those skilled in the art may appreciate that information and signals may be expressed by using predetermined various different technologies and techniques. For example, data, indications, commands, information, signals, bits, symbols, and chips referable in the foregoing description may be expressed with voltages, currents, electromagnetic waves, magnetic fields or particles, optical fields or particles, or a predetermined combination thereof.

Those skilled in the art will appreciate that the various illustrative logical blocks, modules, processors, means, circuits, and algorithm operations described in relationship to the embodiments disclosed herein may be implemented by electronic hardware (for convenience, called "software" herein), various forms of program or design code, or a combination thereof. In order to clearly describe compatibility of the hardware and the software, various illustrative components, blocks, modules, circuits, and operations are generally illustrated above in relation to the functions of the hardware and the software. Whether the function is implemented as hardware or software depends on design limits given to a specific application or an entire system. Those skilled in the art may perform the function described by various schemes for each specific application, but it shall not be construed that the determinations of the performance depart from the scope of the present disclosure.

Various embodiments presented herein may be implemented by a method, a device, or a manufactured article using a standard programming and/or engineering technology. A term "manufactured article" includes a computer program, a carrier, or a medium accessible from a predetermined computer-readable storage device. For example, the computer-readable storage medium includes a magnetic storage device (for example, a hard disk, a floppy disk, and a magnetic strip), an optical disk (for example, a CD and a DVD), a smart card, and a flash memory device (for example, an EEPROM, a card, a stick, and a key drive), but is not limited thereto. Further, various storage media presented herein include one or more devices and/or other machine-readable media for storing information.

It shall be understood that a specific order or a hierarchical structure of the operations included in the presented processes is an example of illustrative accesses. It shall be understood that a specific order or a hierarchical structure of the operations included in the processes may be rearranged within the scope of the present disclosure based on design priorities. The accompanying method claims provide various operations of elements in a sample order, but it does not mean that the claims are limited to the presented specific order or hierarchical structure.

The description of the presented embodiments is provided so as for those skilled in the art to use or carry out the present disclosure. Various modifications of the embodiments may be apparent to those skilled in the art, and general principles defined herein may be applied to other embodiments without departing from the scope of the present disclosure. Accordingly, the present disclosure is not limited to the embodiments suggested herein, and shall be interpreted within the broadest meaning range consistent to the principles and new characteristics presented herein.

In addition to the appended claims which define the subject-matter of the invention, the invention is further defined in the format of the clauses listed herein below:

### Clauses

1. An apparatus for imaging an object, the apparatus comprising:
   a first circular plate configured to perform a first rotational motion;
   a second circular plate installed on the first circular plate and configured to perform a second rotational motion of a different type from the first rotational motion in a second rotation zone on a same plane as the first circular plate; and
   an imaging device configured to image an object supported on the second circular plate while the second circular plate performs the second rotational motion in the second rotation zone.
2. The apparatus of clause 1, wherein the second circular plate revolves on the first circular plate by the first rotational motion, and
   wherein the second circular plate rotates by the second rotational motion.
3. The apparatus of clause 2, wherein while the second circular plate performs the second rotational motion in the second rotation zone, the imaging device that images the object supported on the second circular plate images a side surface of the object.
4. The apparatus of clause 2, wherein the first rotational motion is implemented through a guide rail installed at an upper end or a lower end of the first circular plate, and
   wherein the second rotation zone corresponds to a zone where the guide rail is not installed in a region where the second circular plate revolves.
5. The apparatus of clause 4, further comprising:
   a guide rail matching unit configured to link the guide rail and the second circular plate.
6. The apparatus of clause 5, further comprising:
   a fixation unit configured to fix the object to the second circular plate,
   wherein the fixation unit fixes the object by magnetism.
7. The apparatus of clause 6, further comprising:
   an input unit configured to locate the object on the second circular plate at either side of the first circular plate;
   a recovery unit configured to recover the object located on the second circular plate; and
   a transfer unit configured to transfer the recovered object.
8. The apparatus of clause 5, 6 or 7, further comprising:
   a top surface imaging device configured to image a top surface of the object; and
   a bottom surface imaging device configured to image a bottom surface of the object.
9. The apparatus of clause 8, further comprising:
   a classification unit configured to classify a failure by utilizing a rule-based model or an artificial intelligence model based on an object imaging result of at least one of: the imaging device, the top surface imaging device, or the bottom surface imaging device.
10. The apparatus of clause 9, wherein the classification unit that classifies the failure by utilizing the rule-based model or the artificial intelligence model based on the object imaging result of at least one of the imaging device, the top surface imaging device, or the bottom surface imaging device performs at least one of:
   binary classification of whether the object corresponds to a failure, or
   multi class classification of which type of failure the object corresponds to.
11. A method for imaging an object, the method performed by a computing device, the method comprising:
   controlling a first circular plate to perform a first rotational motion;
   controlling a second circular plate installed on the first circular plate to perform a second rotational motion of a different type from the first rotational motion in a second rotation zone on a same plane as the first circular plate; and
   controlling to image an object supported on the second circular plate while the second circular plate performs the second rotational motion in the second rotation zone.
12. The method of clause 11, wherein the second circular plate revolves on the first circular plate by the first rotational motion, and
   wherein the second circular plate rotates by the second rotational motion.
13. The method of clause 12, wherein controlling to image the object supported on the second circular plate while the second circular plate performs the second rotational motion in the second rotation zone comprises imaging a side surface of the object.
14. The method of clause 12, wherein the first rotational motion is implemented through a guide rail installed at an upper end or a lower end of the first circular plate, and
   wherein the second rotation zone corresponds to a zone where the guide rail is not installed in a region where the second circular plate revolves.
15. The method of clause 14, wherein by a guide rail matching unit configured to link the guide rail and the second circular plate, the second circular plate makes a first rotational motion through the guide rail.
16. The method of clause 15, further comprising:
   fixing the object to the second circular plate by using a fixation unit,
   wherein the fixation unit fixes the object by magnetism.
17. The method of clause 16, further comprising:
   locating, by an input unit, the object on the second circular plate at either side of the first circular plate;
   recovering, by a recovery unit, the object located on the second circular plate; and
   transferring, by a transfer unit, the recovered object.
18. The method of clause 15, 16 or 17, further comprising:
   imaging, by a top surface imaging device, a top surface of the object; and
   imaging, by a bottom surface imaging device, a bottom surface of the object.
19. The method of clause 18, further comprising:
   classifying, by a classification unit, a failure by utilizing a rule-based model or an artificial intelligence model based on an object imaging result of at least one of: the imaging device, the top surface imaging device, or the bottom surface imaging device.
20. The method of clause 19, wherein the classification unit performs at least one of:
   binary classification of whether the object corresponds to a failure, or
   multi class classification of which type of failure the object corresponds to.
21. A computer program stored in a non-transitory computer-readable storage medium, wherein when the computer program is executed by one or more processors, the computer program allows the one or more processors to perform following operations for imaging an object, the operations comprising:
   an operation of a first rotational motion in which a first circular plate rotates;
   an operation of a second rotational motion in which a second circular plate installed on the first circular plate rotates in a different type from the first rotational motion in a second rotation zone on a same plane as the first circular plate; and
   an operation of imaging an object supported on the second circular plate while the second circular plate performs the second rotational motion in the second rotation zone.
22. The computer program of clause 21, wherein the second circular plate revolves on the first circular plate by the first rotational motion, and
   the second circular plate rotates by the second rotational motion.
23. The computer program of clause 22, wherein an operation of imaging the object supported on the second circular plate while the second circular plate performs the second rotational motion in the second rotation zone comprises an operation of imaging a side surface of the object.
24. The computer program of clause 22, wherein the first rotational motion is implemented through a guide rail installed at an upper end or a lower end of the first circular plate, and
   the second rotation zone corresponds to a zone, among a region where the second circular plate revolves, where the guide rail is not installed.
25. The computer program of clause 24, wherein the operation comprises controlling the second circular plate to perform the first rotational motion through the guide rail by a guide rail matching unit configured to link the guide rail and the second circular plate.
26. The computer program of clause 25, wherein the operation further comprises fixing the object to the second circular plate by using a fixation unit,
   wherein the fixation unit fixes the object by magnetism.
27. The computer program of clause 26, wherein the operation further comprises:
   locating, by an input unit, the object on the second circular plate at either side of the first circular plate;
   recovering, by a recovery unit, the object located on the second circular plate; and
   transferring, by a transfer unit, the recovered object.
28. The computer program of clause 25, 26, or 27, wherein the operation further comprises:
   imaging, by a top surface imaging device, a top surface of the object; and
   imaging, by a bottom surface imaging device, a bottom surface of the object.
29. The computer program of clause 28, wherein the operation further comprises classifying, by a classification unit, a failure by utilizing a rule-based model or an artificial intelligence model based on an object imaging result of at least one of: the imaging device, the top surface imaging device, or the bottom surface imaging device.
30. The computer program of clause 29, wherein the classification unit performs at least one of:
   binary classification of whether the object corresponds to a failure; or
   multi-class classification of which type of failure the object corresponds to.

## Claims

1. An apparatus for imaging an object, the apparatus comprising:
a first circular plate configured to perform a first rotational motion;
a second circular plate installed on the first circular plate and configured to perform a second rotational motion of a different type from the first rotational motion in a second rotation zone on a same plane as the first circular plate; and
an imaging device configured to image an object supported on the second circular plate while the second circular plate performs the second rotational motion in the second rotation zone.

2. The apparatus of claim 1, wherein the second circular plate revolves on the first circular plate by the first rotational motion, and
wherein the second circular plate rotates by the second rotational motion.

3. The apparatus of claim 2, wherein while the second circular plate performs the second rotational motion in the second rotation zone, the imaging device that images the object supported on the second circular plate images a side surface of the object.

4. The apparatus of claim 2, wherein the first rotational motion is implemented through a guide rail installed at an upper end or a lower end of the first circular plate, and
wherein the second rotation zone corresponds to a zone where the guide rail is not installed in a region where the second circular plate revolves.

5. The apparatus of claim 4, further comprising:
a guide rail matching unit configured to link the guide rail and the second circular plate.

6. The apparatus of claim 5, further comprising:
a fixation unit configured to at least temporarily fix the object to the second circular plate,
wherein the fixation unit at least temporarily fixes the object by magnetism.

7. The apparatus of claim 6, further comprising:
an input unit configured to locate the object on the second circular plate at either side of the first circular plate;
a recovery unit configured to recover the object located on the second circular plate; and
a transfer unit configured to transfer the recovered object.

8. The apparatus of claim 5, further comprising:
a top surface imaging device configured to image a top surface of the object; and
a bottom surface imaging device configured to image a bottom surface of the object.

9. The apparatus of claim 8, further comprising:
a classification unit configured to classify a failure by utilizing a rule-based model or an artificial intelligence model based on an object imaging result of at least one of: the imaging device, the top surface imaging device, or the bottom surface imaging device.

10. The apparatus of claim 9, wherein the classification unit that classifies the failure by utilizing the rule-based model or the artificial intelligence model based on the object imaging result of at least one of the imaging device, the top surface imaging device, or the bottom surface imaging device performs at least one of:
binary classification of whether the object corresponds to a failure, or
multi class classification of which type of failure the object corresponds to.

11. A method for imaging an object, the method performed by a computing device, the method comprising:
controlling a first circular plate to perform a first rotational motion;
controlling a second circular plate installed on the first circular plate to perform a second rotational motion of a different type from the first rotational motion in a second rotation zone on a same plane as the first circular plate; and
controlling to image an object supported on the second circular plate while the second circular plate performs the second rotational motion in the second rotation zone.

12. The method of claim 11, wherein the second circular plate revolves on the first circular plate by the first rotational motion, and
wherein the second circular plate rotates by the second rotational motion.

13. The method of claim 12, wherein the first rotational motion is implemented through a guide rail installed at an upper end or a lower end of the first circular plate, and
wherein the second rotation zone corresponds to a zone where the guide rail is not installed in a region where the second circular plate revolves.

14. The method of claim 13, further comprising:
at least temporarily fixing the object to the second circular plate by using a fixation unit,
wherein the fixation unit at least temporarily fixes the object by magnetism.

15. A computer program stored in a non-transitory computer-readable storage medium, wherein when the computer program is executed by one or more processors, the computer program allows the one or more processors to perform following operations for imaging an object, the operations comprising:
an operation of a first rotational motion in which a first circular plate rotates;
an operation of a second rotational motion in which a second circular plate installed on the first circular plate rotates in a different type from the first rotational motion in a second rotation zone on a same plane as the first circular plate; and
an operation of imaging an object supported on the second circular plate while the second circular plate performs the second rotational motion in the second rotation zone.
